# EUROPEAN PATENT APPLICATION

(11) **EP 3 124 158 A1**
(43) Date of publication of application: **01.02.2017**
(21) Application number: 16173748.1
(22) Date of filing: 09.06.2016
(51) Int. Cl.: B23K 9/00, B23K 9/095, B23K 9/10

(54) **WELDING SYSTEM HAVING MULTIPLE WELD OUTPUTS**

(30) Priority: 31.07.2015 US 201514815355
(71) Applicant: Illinois Tool Works, Inc., Illinois 60025 (US)
(72) Inventor: RADTKE, David E., Glenview, Illinois, 60025 (US); JOYCE, Richard C., Glenview, Illinois, 60025 (US); PFEIFER, Kyle A., Glenview, Illinois, 60025 (US); SMITH, Alan F., Glenview, Illinois, 60025 (US)
(74) Representative: Trinks, Ole

(57) **Abstract**

An engine driven welder comprises an engine coupled to a generator, wherein the engine drives the generator. The engine driven welder employs a first power module coupled to the generator that provides a first weld output and a second power module coupled to the generator, which provides a second weld output. A controller employing a single processor is operatively coupled to each of the first power module and the second power module.

## Description

### BACKGROUND OF THE INVENTION

The invention relates generally to an engine driven welder and, more particularly, to a multi-operator engine driven welder system. Welding is a process that has increasingly become ubiquitous in all industries. Welding is, at its core, simply a way of bonding two pieces of metal. Larger welding systems can generate a welding current output in excess of 100 amps, while micro-welding may employ a micro arc under a few amps.

Welding systems may be coupled to the power grid or use a fuel-powered engine to drive an electric generator, which in turn generates the required current for the specific welding operation. The size of the engine and electric generator is dictated by the maximum welding current output rating of the welder. For instance, a welder that is rated to generate a 300-amp, 33.3 volt arc can require at least 10 kilowatts of power to generate such an arc. Indeed, the power source is often configured to output a higher power (*e.g.,* about 30% higher) than what is required by the arc to account for power loss that may result from, for example, a weld cable voltage drop. Thus, the engine in such a welder must have sufficient horse power to drive an electric generator to generate about 13 kilowatts of power so as to supply the maximum welding current output rating of the welder at any given time.

In certain aspects, it is advantageous to provide a welding system with multiple outputs, often referred to as multi-operator welding systems. For example, commonly owned U.S. Patent Publication No. 2014/0238966, titled "Multi-Operator Engine Driven Welder System," discloses a multi-operator engine driven welder system. Such multi-operator welding systems are capable of generating multiple arcs, each of which may be used by separate human or machine operators. Multi-operator welding systems offer a number of advantages including, *inter alia,* improved productivity by increasing *(e.g.,* doubling, tripling, etc.) the welding output of a single machine, a lower total cost of ownership compared to multiple separate machines, less equipment to transport and move around a site, noise reduction compared to multiple units, reduced emissions compared to multiple units, and reduced maintenance costs.

Existing multi-operator welding systems can, however, suffer from a number of drawbacks, including, for example, the formation of an output ripple and an undesirable audible beat frequency. Accordingly, the subject disclosure relates to a multi-operator engine driven welder system and, more particularly, system, method, and apparatus for controlling multiple weld outputs in a multi-operator welding system, or apparatus, to achieve cost savings and to improve arc/weld quality.

### BRIEF SUMMARY

The invention relates to multi-operator welding systems. More specifically, the invention relates to a system, method, and apparatus for controlling multiple weld outputs in a multi-operator welding system, or apparatus, to achieve cost savings and to improve arc/weld quality, substantially as illustrated by and/or described in connection with at least one of the figures, as set forth more completely in the claims.

According to a first aspect, an engine driven welder comprises: a generator configured to provide an electrical output; an engine coupled to the generator, wherein the engine drives the generator; a first power module coupled to the generator that provides a first weld output; a second power module coupled to the generator that provides a second weld output; and a controller coupled to the first power module and the second power module, wherein the controller employs a single processor.

In certain aspects, the second weld output is independent of the first weld output in an independent mode, or the second weld output is combined with the first weld output as a combined weld output in a parallel mode.

According to a second aspect, an engine driven welder comprises: a generator configured to provide an electrical output; an engine coupled to the generator, wherein the engine drives the generator; a first power module coupled to the generator that provides a first weld output; a second power module coupled to the generator that provides a second weld output; a first controller operatively coupled to the first power module, the first controller comprising a first processor; and a second controller operatively coupled to the second power module, the second controller comprising a second processor, wherein the first and the second processor share a common clock signal.

According to a third aspect, a welding apparatus comprises: a power supply configured to provide an electrical output; a first power module coupled to the power supply that provides a first weld output; a second power module coupled to the power supply that provides a second weld output; a first controller operatively coupled to the first power module, the first controller comprising a first processor; and a second controller operatively coupled to the second power module, the second controller comprising a second processor, wherein the first and the second processor share a high-speed bus.

In certain aspects, the first power module comprises a first control board that controls the first weld output, the second power module comprises a second control board that controls the second weld output, and the first control board is what controls the second control board in the parallel mode.

In certain aspects, the first power module comprises a first operator interface that adjusts the first weld output and the second power module comprises a second operator interface that adjusts the second weld output.

In certain aspects, the first operator interface is what adjusts the combined weld output.

In certain aspects, an operator input provided and configured to select the independent mode or the parallel mode, wherein the operator input is configured to engage a switch between the first power module and the second power module in the parallel mode and to disengage the switch in the independent mode.

In certain aspects, an auxiliary power circuit is coupled to the generator, wherein the auxiliary power circuit that provides an auxiliary power output.

In certain aspects, the accessory comprises one or more static welders.

### BRIEF DESCRIPTION OF THE DRAWINGS

The features of the present invention will best be understood from a detailed description of the invention and a preferred embodiment thereof selected for the purposes of illustration and shown in the accompanying drawings in which:
Figures 1a and 1b illustrate an exemplary manual arc multi-operator welding system in accordance with an aspect of this disclosure.
Figure 2 illustrates an exemplary robotic arc multi-operator welding system in accordance with an aspect of this disclosure.
Figure 3 illustrates example welding equipment in accordance with an aspect of this disclosure.
Figure 4 illustrates a block diagram of an exemplary controller system having a single controller that controls two power supplies.
Figure 5 illustrates a block diagram of a first exemplary controller system having two controllers and synchronized to a common clock signal.
Figure 6 illustrates a block diagram of a second exemplary controller system having two controllers connected via high-speed bus.
Figure 7 illustrates a block diagram of a third exemplary controller system having two controllers connected via high-speed bus and synchronized to a common clock signal.

### DETAILED DESCRIPTION

The present disclosure is directed to a system, method, and apparatus for controlling multiple weld outputs in a multi-operator welding system, or apparatus, to achieve cost savings and to improve arc/weld quality. Preferred embodiments of the present invention will be described hereinbelow with reference to the figures of the accompanying drawings. Like reference numerals are used throughout the drawings to depict like or similar elements. In the following description, well-known functions or constructions are not described in detail, since such descriptions would obscure the invention in unnecessary detail.

For the purpose of promoting an understanding of the principles of the claimed technology and presenting its currently understood, best mode of operation, reference will be now made to the embodiments illustrated in the drawings and specific language will be used to describe the same. It will nevertheless be understood that no limitation of the scope of the claimed technology is thereby intended, with such alterations and further modifications in the illustrated device and such further applications of the principles of the claimed technology as illustrated therein being contemplated as would typically occur to one skilled in the art to which the claimed technology relates.

As used herein, the word "exemplary" means "serving as an example, instance, or illustration." The embodiments described herein are not limiting, but rather are exemplary only. It should be understood that the described embodiments are not necessarily to be construed as preferred or advantageous over other embodiments. Moreover, the terms "embodiments of the invention," "embodiments," or "invention" do not require that all embodiments of the invention include the discussed feature, advantage, or mode of operation.

As utilized herein the terms "circuits" and "circuitry" refer to physical electronic components *(i.e.* hardware) and any software and/or firmware (code) that may configure the hardware, be executed by the hardware, and or otherwise be associated with the hardware. As used herein, for example, a particular processor and memory may comprise a first "circuit" when executing a first set of one or more lines of code and may comprise a second "circuit" when executing a second set of one or more lines of code. As utilized herein, "and/or" means any one or more of the items in the list joined by "and/or". As an example, "x and/or y" means any element of the three-element set {(x), (y), (x, y)}. In other words, "x and/or y" means "one or both of x and y". As another example, "x, y, and/or z" means any element of the seven-element set {(x), (y), (z), (x, y), (x, z), (y, z), (x, y, z)}. In other words, "x, y, and/or z" means "one or more of x, y and z". As utilized herein, the term "exemplary" means serving as a non-limiting example, instance, or illustration. As utilized herein, the terms *"e.g."* and "for example" set off lists of one or more non-limiting examples, instances, or illustrations. As utilized herein, circuitry is "operable" to perform a function whenever the circuitry comprises the necessary hardware and code (if any is necessary) to perform the function, regardless of whether performance of the function is disabled or not enabled *(e.g.,* by an operator-configurable setting, factory trim, etc.).

As will be appreciated, multi-output welding equipment in accordance with an aspect of the present invention may employ a single controller (*e.g*., a processor) to control multiple weld outputs. Using a single controller yields a tightly coupled welding system and power supply control architecture to enable better weld quality, lower Electromagnetic Compatibility (EMC) emissions, and reduced costs. Further, a single controller achieves cost savings and weld process control synchronization for paralleled power supplies to improve arc/weld quality. While the term "single controller" is employed, it should be appreciated that a single controller may employ processors with a single processing core, multiple processing cores, or co-processor cores. Such multi-output welding equipment can also eliminate output ripple of paralleled power modules by controlling switching from a single controller to synchronize power supply switching between the paralleled power supply modules, thereby improving arc/weld quality. Further, the multi-output welding equipment reduces EMC emissions by controlling switching timing of multiple power modules from a single controller. As in the case of a single power module with a plurality of paralleled switches, changing switching schemes from multiphase interleaved (*i.e.,* switching out of phase with each other) to synchronized switching (*i.e.,* switching in phase) may be accomplished to meet third party EMC requirements.

Existing multi-operator machines, on the other hand, employ separate controllers (and microprocessors) for each weld output. Employing separate controllers and microprocessors, however, suffer from a number of drawbacks. For example, when outputs are paralleled to double the weld output using separate controllers, switching devices of the paralleled power supplies are not synced, resulting in output ripple and an undesirable audible beat frequency. This subject disclosure solves this problem by controlling and syncing all power supply switching from a single controller (*e.g.,* a single processor) so that switching can be accurately synced to nano-second accuracy.

Further, in existing multi-operator machines, when outputs are paralleled to double the weld output using separate controllers, the individual controllers are running separate, un-synchronized weld process control (*e.g.,* arc control) algorithms-resulting in a possible reduction of weld quality for certain weld processes as one controller lags the other in reacting to changing arc conditions during the welding process. Multi-output welding equipment in accordance with an aspect of the present invention eliminates all weld control algorithmic synchronization problems by running a single weld control program and controlling multiple power modules from a single controller. That is, in a single power module, there are paralleled switches that share current.

At present, the switching scheme (whether a single phase buck, multiphase interleaved, etc.) is permanently set and is the same for all welding conditions and can result in EMC emissions while welding that could exceed some 3rd party limits now or in the future. Also, in a traditional paralleled power supply, weld quality can be reduced from output ripple that is created due to slight variations in switching frequency from the paralleled power modules. Using a single controller for multiple weld outputs also enables full control of the switching scheme and timing of each switch's switching event in a single power module (or in paralleled power modules) down to the nano-second in order to adjust switching schemes and timings across multiple switches in multiple power modules to reduce EMC emissions and reduce output ripple from unsynchronized switching.

Multi-output welding equipment in accordance with an aspect of the present invention improve arc quality of paralleled power modules and save money and space by reducing the number of hardware components needed to control multiple (*e.g.,* two or more) weld arcs. The single controller employs a microprocessor configured to provide sufficient computing capacity to properly control the switching devices used to provide weld output to two or more operators and to synchronize and drive multiple switching devices, such as insulated-gate bipolar transistors (IGBT) or metal-oxide-semiconductor field-effect transistors (MOSFET), for each of the weld outputs and modulate switching characteristics of multiple switches across multiple power modules to give the best arc quality and lowest EMC emissions.

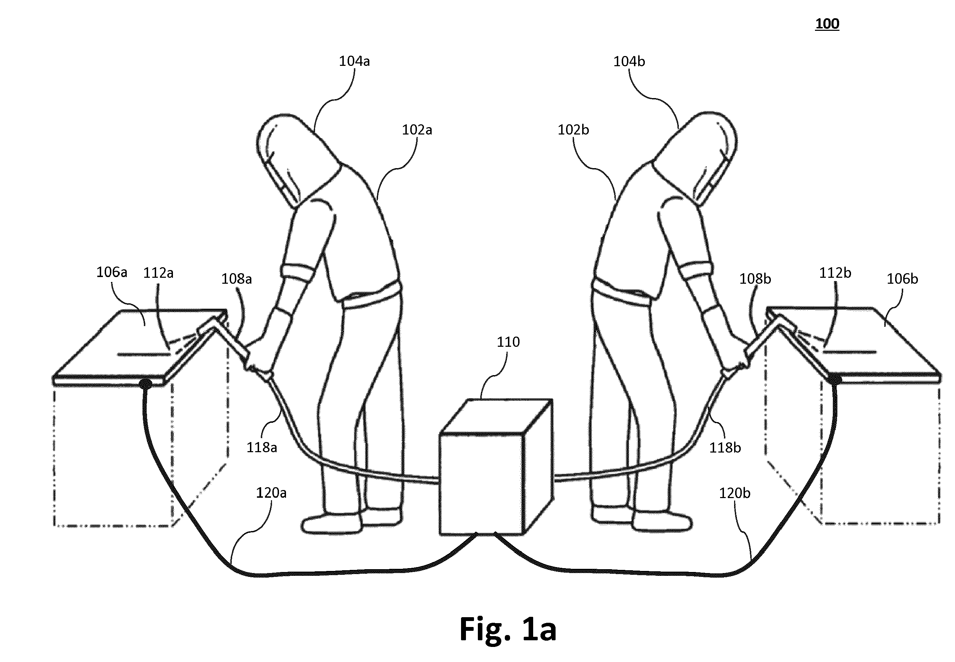

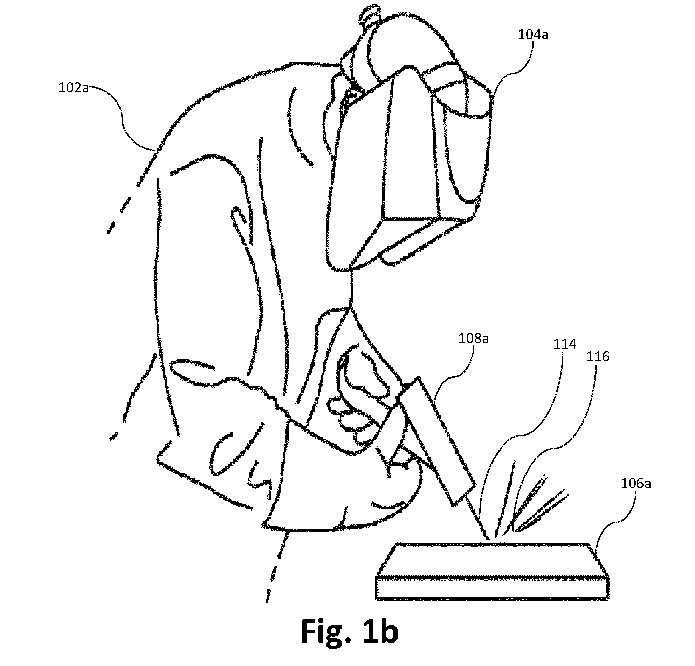

Referring to Figures 1a and 1b, example manual multi-output welding equipment 110 is shown in which each operator 102a, 102b is wearing welding headwear 104a, 104b and welding a workpiece 106a, 106b using a welding tool 108a, 108b *(e.g.,* a torch) to which power is delivered by multi-output welding equipment 110 via conduit 118a, 118b (for electrical welding, ground conduit 120a, 120b provides the return path). The multi-output welding equipment 110 may comprise a power source (generally referred to as a "power supply"), optionally a source of an inert shield gas and, where wire/filler material is to be provided automatically, a wire feeder.

The multi-output welding equipment 110 of Figure 1a may be configured to cut material *(e.g.,* as a plasma cutter) or form a weld joint 112a, 112b using, for example, electric welding techniques (such as shielded metal arc welding (SMAW), more commonly known as stick welding), metal inert gas welding (MIG), flux cored arc welding (FCAW), tungsten inert gas welding (TIG), and resistance welding. TIG welding may involve no external filler metal or may involve manual, automated or semi-automated external metal filler. Optionally in any embodiment, the multi-output welding equipment 110 may be arc welding equipment that provides a direct current (DC) or alternating current (AC) to a consumable or non-consumable electrode 114 (better shown in, for example, Figure 1b) of a welding tool 108a, 108b, which may be a TIG torch, a MIG torch, a flux cored torch (commonly called a MIG "gun"), or a stick electrode holder (commonly called a "stinger").

In operation, the electrode 114 delivers the current to the point of welding on the workpiece 106a, 106b. In the multi-output welding equipment 110, the operators 102a, 102b control the location and operation of the electrode 114 by manipulating the torch 108a, 108b and triggering the starting and stopping of the current flow via, for example, a trigger positioned on the torch 108a, 108b. When current is flowing, an arc 116 is developed between the electrode 114 and the workpiece 106a, 106b. The conduit 118a, 118b and the electrode 114 thus deliver current and voltage sufficient to create the electric arc 116 between the electrode 114 and the workpiece 106a, 106b. The arc 116 locally melts the workpiece 106a, 106b and welding wire (or rod) supplied to the weld joint 112a, 112b (the electrode 114 in the case of a consumable electrode or a separate wire or rod in the case of a non-consumable electrode) at the point of welding between electrode 114 and the workpiece 106a, 106b, thereby forming a weld joint 112a, 112b when the metal cools. A plasma cutter operates in a similar fashion. Specifically, an inert, or semi-inert, column of gas is guided out of a nozzle 128, while an electrical arc is formed through that gas from the nozzle 128 to the workpiece 106a, 106b being cut, turning some of that gas to plasma. The plasma is hot enough to melt the workpiece 106a, 106b being cut and moves fast enough to blow molten material away from the cut.

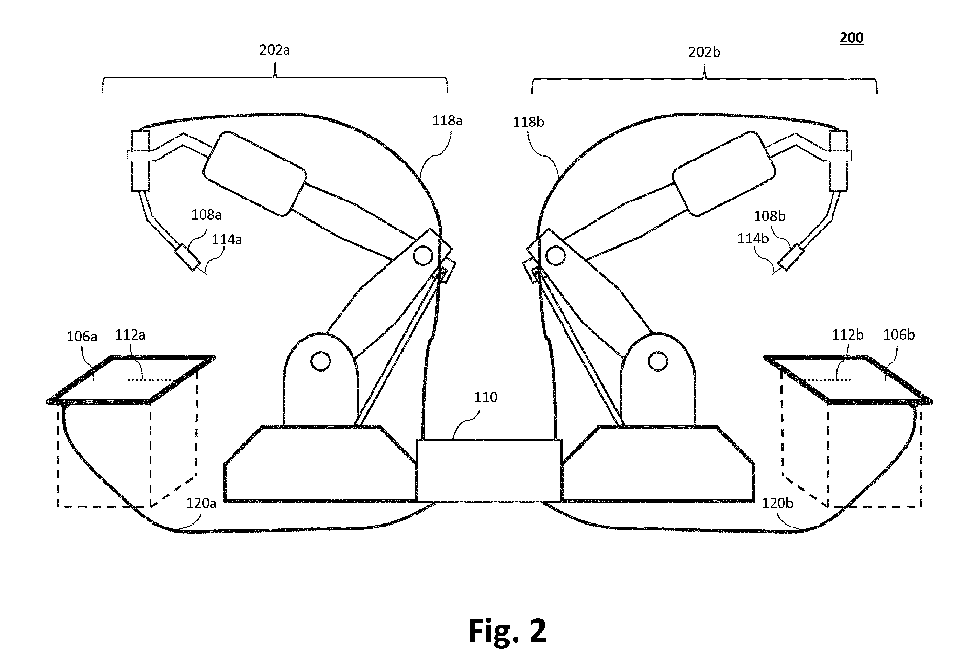

In certain aspects, in lieu of a human operator 102a, 102b, robots 202a, 202b *(e.g.,* a robotic arm) may control the location and operation of the electrode 114. An example of such an arrangement is illustrated in Figure 2, which illustrates an exemplary robotic arc multi-operator welding system 200 in accordance with an aspect of this disclosure. In the multi-operator welding system 200, the robots 202a, 202b control the location and operation of the electrode 114 by manipulating the welding tool 108a, 108b and triggering the starting and stopping of the current flow.

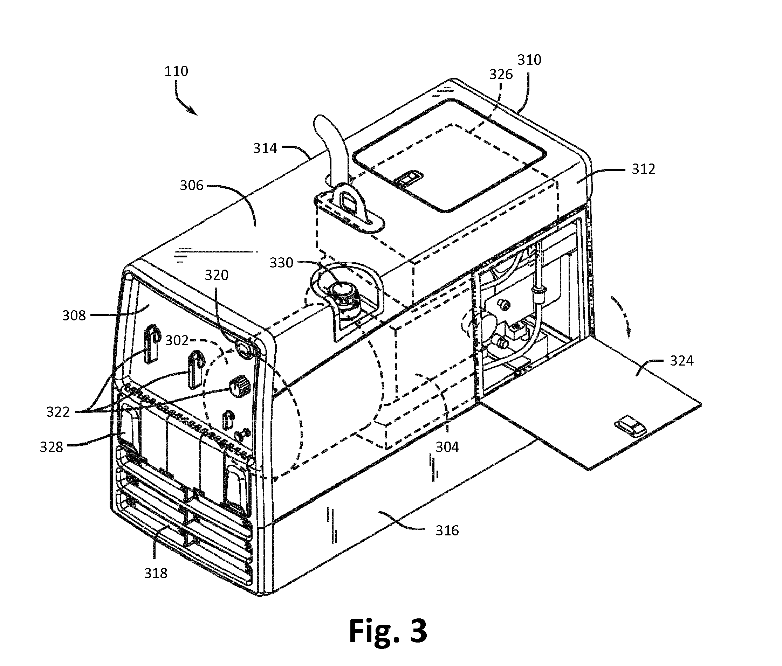

Figure 3 illustrates portable engine-driven multi-output welding equipment 110 for use with manual welding. As illustrated, the portable engine-driven multi-output welding equipment 110 has a generator 302 drivingly coupled to an engine 304 in a single enclosure 306 in accordance with an exemplary embodiment. While the engine-driven multi-output welding equipment 110 of the subject is described as being portable and configured within a single enclosure 306, the subject teachings shall not be limited to portable engine-driven power supplies, but rather, may be applied to stationary and/or larger engine-driven power supplies, such as those that are used in connection with a robotic arc multi-operator welding system 200.

The single enclosure 306 may include multiple functionalities in one portable system to improve productivity and reduce space consumption. Specifically, the multi-output welding equipment 110 is configured to output electrical power for a variety of applications, including welding, cutting, battery charging, jump starting, and so forth. Moreover, the multi-output welding equipment 110 includes intelligence (*e.g.,* logic in software and/or hardware) to adjust the outputs based on various feedback of the multi-output welding equipment 110, and any external devices, receiving the electrical power from the power supply module (*e.g.,* engine 304). That is, the multi-output welding equipment 110 does not randomly provide output power for welding and/or charging, but rather the multi-output welding equipment 110's controller analyzes various parameters, executes various logic, and intakes sensed feedback to make an intelligent decision regarding the output. In some embodiments, however, the multi-output welding equipment 110 may provide output power without adjustment or analysis of any parameters or feedback. The controller regulates the electrical power supplied by the power supply to a first power module 404a and a second power module 404b, but may also allow for the power supply to be used for a welding process and/or auxiliary power to other devices or tools. The controller comprises circuitry (*e.g.,* a microcontroller and memory) operable to process data from the operator interface, the generator 302, one or more sensors, the wire feeder, and/or the gas supply; and to output data and/or control signals to the operator interface, the generator 302, the wire feeder, and/or the gas supply. For instance, the controller may be operatively coupled with an engine (or motor) speed control circuit and/or transformer control circuit.

The enclosure 306 may comprise a front panel 308, a rear panel 310, a right side 312, and a left side 314, all engaging a base 316 to complete the enclosure 306. The enclosure 306 protects, *inter alia,* a power supply *(e.g.,* the generator 302 coupled to an engine 304, or a transformer coupled to a power grid) from dust, debris, and rough handling. The enclosure 306 also reduces noise and helps to cool the engine 304 by preventing hot air recirculation via a cool air inlet 318 on the front panel 308 by pulling air through the interior volume of the enclosure 306. In certain embodiments, the rear panel 310 may also include an air inlet for air intake and/or exhaust flow.

The power supply comprises circuitry for generating (or otherwise providing) power to be delivered to a welding electrode via conduit 118a, 118b. The multi-output welding equipment 110 may comprise, for example, one or more generators, voltage regulators, current regulators, switch mode power supplies, and/or the like. The voltage and/or current output by the power supply may be controlled by a control signal from the control circuitry. In an exemplary embodiment, the power supply comprises an engine 304 and a generator 302, where the engine 304 provides output power *(e.g.,* a mechanical output) to drive the welding generator 302. In certain embodiments, the power from the engine 304 operates the generator 302 via a drive shaft. The drive shaft may be directly or indirectly coupled to one or more driven mechanisms. For example, an indirect coupling may include a belt and pulley system, a gear system, or a chain and sprocket system. In the present embodiment, the drive shaft couples directly to the generator 302. However, either arrangement can be used for the connection between the engine 304 and the generator 302.

Embodiments may include a generator 302 coupled to the engine 304, whereby the generator 302 may convert the power output (*e.g.,* mechanical energy) of the engine 304 to an electrical power. Generally, the generator 302 includes a device configured to convert a rotating magnetic field into an electrical current (*e.g.,* AC generator). The generator 302 includes a rotor (the rotating portion of the generator) and a stator (the stationary portion of the generator). For example, the rotor of the generator 302 may include the rotating drive shaft of the engine 304 disposed in a single stator configured to create an electrical current (*e.g.,* welding current) from the rotation of the magnetic field. In an embodiment, the generator may include a four-pole rotor and three-phase weld output configured to provide beneficial welding characteristics. Further, the generator 302 may include a plurality of independent winding sections in the rotors and/or stators, such that the generator 302 is configured to output multiple electrical outputs having different characteristics. For example, the generator 302 may include a first section configured to drive a welding current to a welder and a second section configured to drive a current for other AC outputs. In some embodiments, multiple generators 12 may be connected to the drive shaft. In an example implementation, the power supply may comprise circuitry for measuring the voltage and/or current on the conduit 118a, 118b (at either or both ends of the conduit 118a, 118b) such that reported voltage and/or current is an actual value and not simply an expected value based on calibration. In an embodiment, the engine 304 may include a combustion engine powered by gas or diesel, liquefied petroleum (LP) fuel, natural gas, or other fuel, and driving one or more drive shafts. For example, the engine 304 may include an industrial gas/diesel engine configured to output anywhere from about 9 horsepower (Hp) to about 65 Hp, or more. Generally, the weight of such an engine 304 may vary with the size and Hp rating of the engine 304. For example, a 65 Hp engine may weigh approximately 1,000 lbs, a 23 Hp engine may weigh approximately 100 lbs., whereas a similar 9 Hp engine may weigh less than approximately 50 lbs. Thus, the portable multi-output welding equipment 110 may benefit from the use of a smaller engine 304.

In other embodiments, a transformer-style power supply may be used in lieu of the aforementioned generator-style power supply. A transformer-style power supply converts a moderate voltage and moderate current supply from the utility mains *(e.g.,* 230 or 115 VAC) into a high current and low voltage supply, typically between 17 to 45 (open-circuit) volts and 55 to 590 amperes. In certain configurations, a rectifier may be provided to convert the AC into DC. A transformer-style design typically allows the operator to select the output current by, for example, selectively moving a primary winding closer or farther from a secondary winding, moving a magnetic shunt in and out of the core of the transformer, using a series saturating reactor with a variable saturating technique in series with the secondary current output, or by simply permitting the operator to select the output voltage from a set of taps on the transformer's secondary winding. Pure transformer style machines are typically less expensive, but are generally larger and bulkier because they operate at the utility mains frequency of 50 or 60 Hz. As a result, such low frequency transformers must have a high magnetizing inductance to avoid wasteful shunt currents.

Regardless of the type of power supply, the power supply may also comprise circuitry for reporting the present current and/or voltage of the welding current output to the controller. In an example implementation, the power supply may comprise circuitry for measuring the voltage and/or current on the conduit 118a, 118b (at either or both ends of the conduit 118a, 118b) such that reported voltage and/or current is an actual value and not simply an expected value based on calibration.

The front panel 308 may provide an operator interface, which may comprise electromechanical interface components (*e.g.,* screen, speakers, microphone, buttons/switches, touchscreen, cameras, voice recognition or hand gesture recognition input device, an industrial personal computer (IPC) or programmable logic controller (PLC), barcode scanner, etc.) and associated drive circuitry. The operator interface may generate electrical signals in response to operator input (*e.g.,* screen touches, button/switch presses, voice commands, remote sensor input, etc.). Driver circuitry of the operator interface may condition (*e.g.,* amplify, digitize, etc.) the signals and communicate them to the control circuitry. The operator interface may generate audible, visual, and/or tactile output *(e.g.,* via speakers, a display, and/or motors/actuators/servos/etc.) in response to signals from the control circuitry. In certain aspects, one or more components of the operator interface may be positioned on the welding tool and/or, whereby control signals from the one or more components are communicated to the control circuitry via conduit 218 or via a network.

The gas supply that provides gas *(e.g.,* shielding gas) via conduit 118a, 118b for use during the welding or cutting process. Shielding gases are generally inert, or semi-inert, gases used in several welding processes, most notably gas metal arc welding and gas tungsten arc welding *(e.g.,* MIG and TIG). A purpose of shielding gases is to protect the weld area from oxygen and water vapor. Depending on the materials being welded, these atmospheric gases can reduce the quality of the weld or make welding more difficult. The gas supply may comprise an electrically controlled valve for controlling the rate of gas flow. The valve may be controlled by a control signal from controller (which may be routed through the wire feeder, or come directly from the controller). The gas supply may also comprise circuitry for reporting the present gas flow rate to the controller. In terms of plasma cutters, the gas supply may be configured to provide gas for cutting purposes. In an example implementation, the gas supply may comprise circuitry and/or mechanical components for measuring the gas flow rate such that the reported flow rate is an actual flow value and not simply an expected flow value based on calibration, thereby providing increased reliability and accuracy. While a gas supply is illustrated, certain welding processes can use other methods of protecting the weld from the atmosphere. For example, shielded metal arc welding uses an electrode covered in a flux that produces carbon dioxide when consumed, a semi-inert gas that is an acceptable shielding gas for welding steel. Thus, the gas supply need not be used for all welding techniques and, in such cases, need not be present in the welding equipment 110.

The wire feeder may be configured to deliver a consumable wire electrode to the weld joint 112a, 112b. The wire feeder module may comprise, for example, a spool for holding the wire, an actuator for pulling wire off the spool to deliver to the weld joint 112a, 112b, and circuitry for controlling the rate at which the actuator delivers the wire. The actuator may be controlled based on a control signal from the control circuitry. The wire feeder module may also comprise circuitry for reporting the present wire speed and/or amount of wire remaining to the control circuitry. In an example implementation, the wire feeder module may comprise circuitry and/or mechanical components for measuring the wire speed, such that reported speed is an actual speed, and not simply an expected value based on calibration, thereby providing increased reliability. For TIG or stick welding, the wire feeder module may not be used (or may not even be present in the multi-output welding equipment 110).

In one embodiment, the front panel 308 may include various indicators 320 to provide feedback to the user. For example, the indicator 320 may include an LCD to display voltage, amperage, air pressure, and the like. Further, in some embodiments, an operator interface 322 may include a touch screen, knobs, and/or buttons configured for a mode of operation, an output level or type, etc. For instance, the operator interface 322 may include a dial rotatable to select a mode of operation, such as a DC weld, an AC weld, a battery charge, or a tool operation. Embodiments of the front panel 308 include any number of inputs and outputs, such as welding methods, oil pressure, oil temperature, and system power.

As depicted in Figure 3, the enclosure 306 may include various access panels to enable servicing, repair, and so forth. For example, a side access panel 324 may be configured to attach to opposite sides of the enclosure 306. The top of the enclosure 306 may include an access panel or hatch 326, which may be both rotatable between open and closed positions above the components of the power supply module 304. The top hatch 326 can rotate open to enable access to the engine 304. Similarly, the side access panel 324 can rotate open to enable access to, when a generator-style power supply is used, the engine 304, oil filter, spark plugs, etc.

The illustrated multi-output welding equipment 110 also includes a plurality of external connections 328. Accordingly, the multi-output welding equipment 110 may include an auxiliary power circuit coupled to the generator. The auxiliary power circuit may provide an auxiliary power output to power, inter alia, one or more accessories, such as static welders, feeders (e.g., dumb feeders and smart feeder), and other devices and tools. The external connections 328 may include various outlets and couplers configured to provide access to the electrical power generated by the power supply module 304. For example, the external connections 328 may include an AC power output and a DC power output, which may be coupled to various accessories. For example, the AC power output may provide auxiliary power to various devices or tools integrated within or coupled to the power supply module 304. The DC power output can be coupled to a plurality of welding and cutting tools, such as two or more welding torches. The welding devices may receive current from the generator 302 via the external connections 328. For additional information pertaining to techniques for converting current in welding equipment to power accessories, see, for example, commonly owned U.S. Patent Publication No. 20110309054 titled "Modular Direct Current Power Source," which was filed May 26, 2011.

As will be appreciated, the torch may include various welding devices, such as a TIG (tungsten inert gas) torch, a MIG (metal inert gas) gun, a plasma cutting torch, etc. The multi-output welding equipment 110 may also include welding cable connecting the torch to the external connections 328. Further, the multi-output welding equipment 110 may include other components necessary for operation of a welding device, such as a wire feeder, a shielding gas supply, and/or any other component, or combination thereof. The multi-output welding equipment 110 also includes a fuel tank that holds fuel to be provided to the engine 304. The fuel tank includes an opening for adding fuel to the fuel tank. A fuel cap 330 is used to cover the opening of the fuel tank and may be used to vent fuel vapor. For example, the fuel cap 330 may include a pressure relief valve for releasing fuel vapor when pressure within the fuel tank exceeds a threshold pressure. The fuel cap may further include a check valve to allow air into fuel tank when a pressure within the fuel tank is negative.

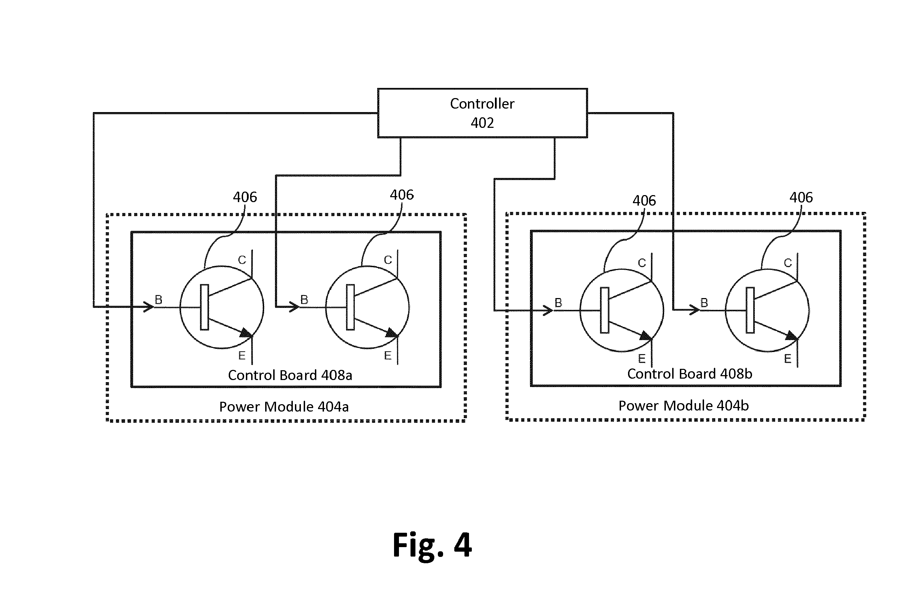

Figure 4 illustrates a block diagram 400 of an exemplary controller system having a single controller 402 that controls multiple power modules 404a, 404b. While only two power modules 404a, 404b are illustrated, one of skill in the art would recognize that additional power modules may be added. As illustrated, each of the power modules 404a, 404b may be controlled via a plurality of switching devices 406. Suitable switching devices 406 include, for example, IGBTs and MOSFETs. For example, the controller 402 may be configured to synchronize and drive the switching devices 406 for each of the weld outputs and modulate switching characteristics of multiple switches across the power modules 404a, 404b to yield the best arc quality and lowest EMC emissions. In one aspect, the single controller 402 may comprise multiple discrete multiple processors that are synchronized and control multiple power modules 404a, 404b. In another aspect, the single controller 402 may be composed entirely of analog circuits that are synchronized such that timing of power module switching and/or arc control states are tightly controlled for paralleled power modules 404a, 404b and among the switches in each power modules 404a, 404b. In yet another aspect, the single processor may employ multiple cores, in a single controller, that controls multiple power modules 404a, 404b and multiple arcs. Finally, the single processor may employ internal, or external, co-processors in a single controller to control multiple power modules 404a, 404b and multiple arcs. Example external co-processors include microcontrollers, digital signal processing (DSP) devices, field-programmable gate arrays (FPGA), or complex programmable logic devices (CPLD).

In operation, the first power module 404a may process a first portion of the electrical output from the power supply to provide a first weld output to a first terminal set (which may, in turn, be coupled to conduit 118a) of the multi-operator engine driven welder 110. Similarly, a second power module 404b may process a second portion of the electrical output from the power supply to provide a second terminal set (which may, in turn, be coupled to conduit 118b) of the multi-operator engine driven welder 110. The first power module 404a and the second power module 404b enable an operator to perform multiple types of welding applications from the same terminal set *(e.g.,* first terminal set, second terminal set). In some embodiments, the first power module 404a and/or second power module 404b may convert a DC electrical input to a weld output with a controlled waveform, such as a pulsed welding process or a short circuit welding process (*e.g.,* regulated metal deposition (RMD TM)). In some embodiments, the first weld output and the second weld output may be a constant current (CC) or constant voltage (CV) weld output. In some embodiments, the first weld output or the second weld output may be an AC weld output.

Multiple welding systems, such as those illustrated in Figures 1a and 2, may be facilitated by coupling multiple torches to the multi-operator engine driven welder 110 via conduits 118a, 118b. The first power module 404a and the second power module 404b may be separately connected to the power supply, thereby enabling multiple operators to perform welding applications from the same multi-operator engine driven welder 110. Accordingly, the first power module 404a and the second power module 404b may be electrically insulated from one another so as to be independent. In some embodiments, the first power module 404a may supply a first weld output to the first terminal set independent of a second weld output from the second power module 404b to the second terminal set. Thus, a first operator may perform a first welding *(e.g.,* TIG welding) application with a first torch connected to the first terminal set, while a second operator performs a second welding (*e.g.,* pulsed MIG) welding application with a second torch connected to the second terminal set. In other words, the first power module 404a and the second power module 404b may provide independent weld outputs simultaneously, thereby enabling multiple operators to perform welding applications simultaneously. The first power module 404a and second power module 404b may also provide weld outputs at different times from one another.

The first power module 404a and second power module 404b of the multi-operator engine driven welder 110 may be configurable in an independent mode or a combined *(e.g.,* parallel) mode. A mode input device *(e.g.,* lever, dial, button, etc.) may be positioned on the operator interface to control the mode of the multi-operator engine driven welder 110. In the independent mode, the first weld output is controlled and supplied to the first terminal set independent of the second weld output supplied to the second terminal set. That is, the first operator utilizing the first power module 404a may use a different process (*e.g.,* stick, TIG, MIG, arc gouging) with different electrical output parameters (*e.g.,* voltage, amperage, CC, CV, controlled waveform) than the second operator utilizing the second power module 404b. In the combined mode, the second weld output from the second power module 404b is combined (*e.g.,* summed) with the first weld output from the first power module 404a as a combined weld output. The combined output may be provided to the first terminal set or the second terminal set based on the position of a switch. The combined output may be utilized for the same processes (*e.g.,* stick, TIG, MIG, arc gouging) and as the first or second weld outputs with the greater power. The power available for welding applications in the combined mode may be approximately the sum of the power available to the separate welding systems.

The first power module 404a generally comprises a first control board 408a that controls the first weld output, while the second power module 404b comprises a second control board 408b that controls the second weld output. The first control board 408a controls a first conversion circuit to convert the first portion of the electrical output to the first weld output. Correspondingly, the second control board 408b controls a second conversion circuit to convert the second portion of the electrical output to the second weld output. The first and second conversion circuits may convert the respective weld outputs from the electrical outputs via one or more switching devices 406, power supplies, switches, boost converters, buck converters, rectifiers, or any combination thereof. In some embodiments, the first conversion circuit utilizes one or more switching devices 406 and the second conversion circuit utilizes one or more switching devices 406. In some embodiments, the first and second welding circuits may have heat sinks to dissipate heat from the respective conversion circuits.

The controller 402 provides instructions to the first control board 408a and to the second control board 408b based at least in part on the process type and electrical output parameters for the one or more desired weld outputs (*e.g.,* first weld output, second weld output, combined weld output). In the independent mode, the controller 402 instructs the first control board 408a to control the first conversion circuit to produce the first weld output independent of the second control board 408b controlling the second conversion circuit to produce the second weld output. In some embodiments with or without a controller 402, the first control board 408a is configured as a master control board to provide instructions to the second control board 408b that is configured as a slave control board. Accordingly, the first control board 408a *(e.g.,* master) may control the first conversion circuit directly and control the second conversion circuit indirectly via the second control board 408b *(e.g.,* slave). In some embodiments without a master-slave relationship between the control boards, the controller 402 in the combined mode may instruct the first control board 408a to control the first conversion circuit and the controller 402 instructs the second control board 408b to control the second conversion circuit. In some embodiments, the first and second control board 408b may receive weld output and process settings directly from the operator interface 322 and control the first and second conversion circuits without instructions from the controller 402.

The controller 402 may monitor the load on the power supply. In some embodiments, such as when an engine-driven power supply is used, the engine's engine speed may be adjusted based on the load. For example, the controller 402 may instruct the engine to increase the engine speed during high loads and decrease the engine speed during idle loads. The controller 402 may instruct the engine to reduce the load on the engine by reducing the electrical output provided to the first and second welding systems and/or disengaging the compressor or auxiliary system from the drive shaft. In some embodiments, the compressor or the auxiliary system may be disengaged from the drive shaft via a clutch.

The controller 402 provides instructions to the first control board 408a and the second control board 408b based at least in part on settings provided through operator inputs of the operator interface 322. Through the operator inputs, the operator may adjust the welding process type *(e.g.,* stick, MIG, TIG), the electrical output parameters (*e.g.,* amperage, voltage), and parameters of the pneumatic output and auxiliary outputs. The operator may adjust the mode input between the independent mode and the combined mode to control a quantity of powered terminals (*e.g.,* the first terminal set and/or the second terminal set). Adjusting the mode input toggles contacts of the switch of the multi-operator engine driven welder 110. The mode input may be a lever that rotates to change the mode between the independent mode and the combined mode. In the independent mode, the contacts direct the second weld output from the second conversion circuit to the second terminal set and the second torch connected to the second terminal set. In the combined mode, the contacts connect the second conversion circuit to the first terminal set to direct the second weld output and the first weld output to the first torch connected to the first terminal set.

In some embodiments, the first power module 404a and the second power module 404b have the same independent mode output range (*e.g.,* maximum voltage, maximum amperage). For example, the first power module 404a and the second power module 404b may provide weld outputs of up to approximately 400 A; a combined weld output formed from the first weld output and the second weld output may have a combined weld output range of up to approximately 800 A. In some embodiments, the first power module 404a and the second power module 404b have different independent mode output ranges that may be combined to provide the combined mode output range. The combined mode output range may thereby be greater than the separate independent mode output ranges of the first power module 404a and second power module 404b of the multi-operator engine driven welder 110.

The systems of Figure 4 offer a number of advantages. First, arc quality is improved when power modules are paralleled by using a single process control algorithm or, as will be discussed, hard-synced control algorithms to synchronize the response of each power module to changing arc conditions. Second, synchronized switching of power supplies in parallel mode to: eliminate unpleasant audible beat frequencies due to a non-common clock for switching frequency; enable multiphase switching to reduce output ripple by treating the separate power supplies as a single supply (now with double the gate transistors) - results in better weld quality; reduces EMC emissions by modulating switching schemes within each power module and synchronizing timing amongst multiple power modules; less cost of a controller since there will be less hardware, *i.e.* one enclosure (*e.g.,* vault), less connectors, harnessing, PC boards, etc.; space saving is also achieved as there is no need to package multiple controllers; weight is reduced as a result of there being fewer parts results; and simplified System Architecture as the need to coordinate settings and synchronize operations between two controllers is obviated. Accordingly, the multi-output system improves arc quality of paralleled power modules and saves money and space by reducing the number of hardware components needed to control multiple weld arcs.

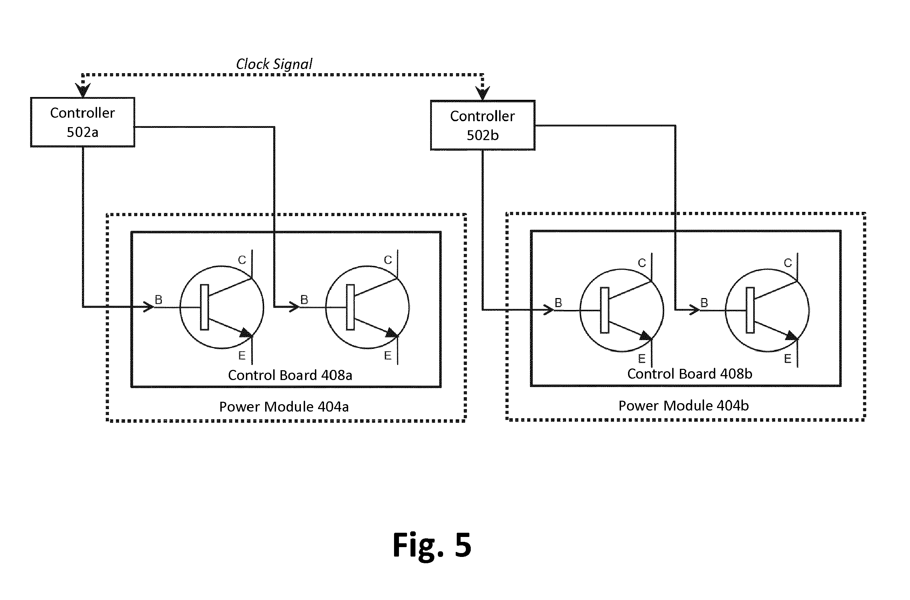

Figure 5 illustrates a block diagram 500 of a first exemplary controller system having two controllers 502a, 502b. In certain situations, it may be preferable to maintain separate controllers. For example, when only lower capacity controllers are available. As disclosed above, such an arrangement can suffer a number of drawbacks. To mitigate these drawbacks, however, the separate controllers may share a common clock signal. That is, a single clock sync signal may be generated by an external device or from a master controller in a system of multiple controllers and shared among multiple controllers 502a, 502b to sync power module switching and eliminate ripple, audible beat frequencies, improve EMC footprint.

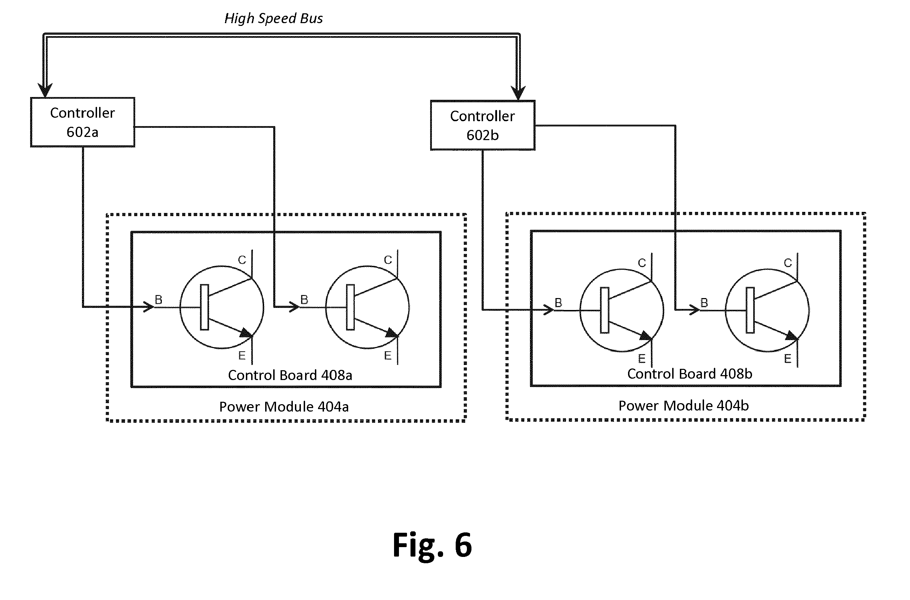

Figure 6 illustrates a block diagram 600 of a second exemplary controller system having two controllers 602a, 602b. Rather than sharing a common clock signal, a high-speed bus, or parallel transistor-transistor logic (TTL) signal, may facilitate communication between multiple controllers 602a, 602b to synchronize arc control states.

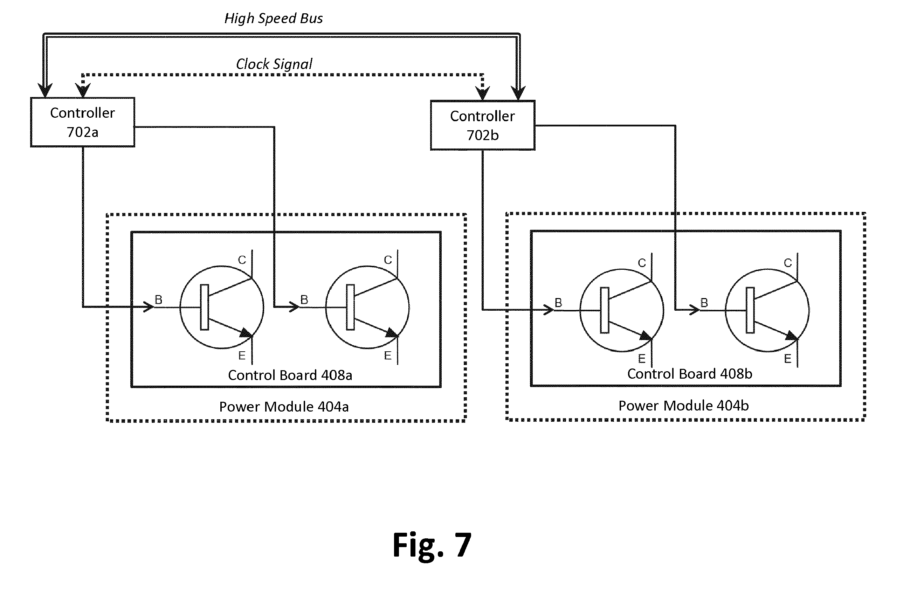

Finally, Figure 7 illustrates a block diagram 700 of a third exemplary controller system having two controllers 702a, 702b. The third exemplary controller system shares a common clock signal for synchronized power module switching, and employs a high-speed bus or parallel TTL signal communication between multiple controllers 702a, 702b to synchronize arc control states.

The foregoing description and accompanying figures illustrate the principles, preferred embodiments, and modes of operation of the invention. However, the invention should not be construed as being limited to the particular embodiments discussed above. Additional variations of the embodiments discussed above will be appreciated by those skilled in the art. Therefore, the above-described embodiments should be regarded as illustrative rather than restrictive. Accordingly, it should be appreciated that variations to those embodiments can be made by those skilled in the art without departing from the scope of the invention as defined by the following claims.

All documents cited herein, including journal articles or abstracts, published or corresponding U.S. or foreign patent applications, issued or foreign patents, or any other documents are each entirely incorporated by reference herein, including all data, tables, figures, and text presented in the cited documents.

## Claims

1. An engine driven welder comprising:
a generator;
an engine coupled to the generator, wherein the engine drives the generator;
a first power module coupled to the generator that provides a first weld output;
a second power module coupled to the generator that provides a second weld output; and
a controller coupled to the first power module and the second power module, wherein the controller employs a single processor.

2. The engine driven welder of claim 1, wherein the second weld output is independent of the first weld output in an independent mode, and the second weld output is combined with the first weld output as a combined weld output in a parallel mode.

3. The engine driven welder of claim 2, wherein the controller comprises multiple control boards with one control board and processor for each weld output and connected together to synchronize weld programs and clock signals for switching.

4. The engine driven welder of one of the preceding claims, wherein the first power module comprises a first operator interface that adjusts the first weld output, and the second power module comprises a second operator interface that adjusts the second weld output.

5. The engine driven welder of claim 4, wherein the first operator interface adjusts the combined weld output.

6. The engine driven welder of one of the preceding claims, comprising an operator input configured to select the independent mode or the parallel mode, wherein the operator input engages a switch between the first power module and the second power module in the parallel mode, and disengages the switch in the independent mode.

7. The engine driven welder of one of the preceding claims, comprising an auxiliary power circuit coupled to the generator, wherein the auxiliary power circuit provides an auxiliary power output.

8. The engine driven welder of claim 7, wherein the auxiliary power output powers one or more accessories.

9. The engine driven welder of claim 8, wherein the one or more accessories comprises one or more feeders or static welders.

10. The engine driven welder of one of the precedings claims, further comprising:
a first controller operatively coupled to the first power module, the first controller comprising a first processor; and
a second controller operatively coupled to the second power module, the second controller comprising a second processor,
wherein the first and the second processor share a common clock signal.

11. The engine driven welder of claim 10, wherein the first power module comprises a first control board that controls the first weld output, the second power module comprises a second control board that controls the second weld output, and the first control board that controls the second control board in the parallel mode.

12. The engine driven welder of claim 10 or 11, wherein the first and the second processor share a high-speed bus.
